# EUROPÄISCHE PATENTSCHRIFT

(11) **EP 3 365 149 B1**
(45) Veröffentlichungstag und Bekanntmachung des Hinweises auf die Patenterteilung: **18.03.2020**
(21) Anmeldenummer: 16831561.2
(22) Anmeldetag: 12.10.2016
(51) Int. Cl.: B29C 45/76, B25J 15/06, B29C 45/42

(54) **EINRICHTUNG ZUM UMSCHLAG BZW. ZUR HANTIERUNG UND TRANSPORT VON WERKSTÜCKEN**
DEVICE FOR TRANSFER AND/OR HANDLING AND TRANSPORT OF WORKPIECES
DISPOSITIF DE TRANSBORDEMENT OU DE MANUTENTION ET DE TRANSPORT DE PIÈCES

(30) Priorität: 21.10.2015 AT 6832015
(43) Veröffentlichungstag der Anmeldung: 29.08.2018
(73) Patentinhaber: Wittmann Kunststoffgeräte GmbH, 1220 Wien (AT)
(72) Erfinder: WITTMANN, Peter Michael, 2100 Leobendorf (AT); RELLA, Johannes, 2671 Payerbach (AT)
(74) Vertreter: Graschitz, Roland
(86) Internationale Anmeldenummer: PCT/AT2016/000089
(87) Internationale Veröffentlichungsnummer: WO 2017/066814

(56) Entgegenhaltungen:
- WO-A1-2012/045105
- JP-A- H05 104 594
- JP-A- H07 205 220
- JP-A- S63 108 960
- JP-A- 2000 317 949
- JP-A- 2006 231 878
- JP-A- 2006 334 836
- DATABASE WPI Week 198724 Thomson Scientific, London, GB; AN 1987-167004 XP002767996, -& JP S62 99127 A (MITSUBISHI HEAVY IND CO LTD) 8. Mai 1987 (1987-05-08)
- JULIO ILLADE-QUINTEIRO ET AL: "Distance Measurement Error in Time-of-Flight Sensors Due to Shot Noise", SENSORS, Bd. 15, Nr. 3, 25. Februar 2015 (2015-02-25), Seiten 4624-4642, XP055353211, DOI: 10.3390/s150304624
- Anonymous: "Proximity Sensors - STMicroelectronics", , 1. Januar 2017 (2017-01-01), XP055353213, Gefunden im Internet: URL:http://www.st.com/en/imaging-and-photo nics-solutions/proximity-sensors.html?quer ycriteria=productId=SC1934 [gefunden am 2017-03-09]
- KHALIGH A ET AL: "Kinetic Energy Harvesting Using Piezoelectric and Electromagnetic Technologies-State of the Art", IEEE TRANSACTIONS ON INDUSTRIAL ELECTRONICS, IEEE SERVICE CENTER, PISCATAWAY, NJ, USA, Bd. 57, Nr. 3, 1. März 2010 (2010-03-01), Seiten 850-860, XP011294271, ISSN: 0278-0046

## Beschreibung

Die Erfindung betrifft eine Einrichtung zum Umschlag bzw. zur Hantierung und Transport von Werkstücken, insbesondere zur Entnahme von Spritzgießartikeln aus einer Spritzgussmaschine, wobei ein, mit einer programmierbaren Steuer- und Regeleinheit versehener, Handhabungsautomat mit einem, mindestens eine Saugdüse zum Erfassen bzw. Ansaugen des Werkstückes aufweisenden, Greifer vorgesehen ist.

Die Problematik, die bei einer Entnahme von Werkstücken aus einer Spritzgussform gegeben sind, sind schon öfters angesprochen worden. Speziell ältere Spritzgießmaschinen öffnen die Spritzgießform mit jedem Zyklus geringfügig unterschiedlich weit. Ebenso können Bediener von Spritzgießmaschinen die Formöffnungposition in jeder Betriebsart an der Steuereinheit verstellen. Dadurch kann ein verlässliches Greifen des Spritzgießteils mittels am Entnahmeroboter befindlichen Greifer nicht garantiert werden. Es besteht sogar die Möglichkeit einer Kollision zwischen Spritzgießform und Entnahmegreifer bzw. Handhabungsautomat.

So ist aus der AT 510 154 B1 eine Einrichtung und ein Verfahren zum Umschlag bzw. zur Hantierung und Transport von Werkstücken, insbesondere zur Entnahme von Spritzgießartikeln aus einer Spritzgussmaschine bekannt. Bei diesem Verfahren wird bei der Annäherung der Saugdüse an das Werkstück die Saugdüse aktiviert und der Unterdruck kontinuierlich bzw. permanent gemessen. Bei Erreichen eines einstellbaren oder ermittelten Schwellwertes des Unterdruckes wird die Vorwärtsbewegung des Handhabungsautomaten, vorzugsweise in einem Bremsvorgang, gestoppt und das Werkstück wird von der Saugdüse angesaugt.

Aus der EP 0 729 405 B1 ist die Entfernung einer optischen Platte von einer Spritzgießform mittels Unterdruck bekannt. Das Hauptaugenmerk wird in dieser Druckschrift auf eine Verkürzung der Handlingzeit gelegt, wobei eine Verminderung der Masse und eine Verkürzung des Weges für den Roboterarm angestrebt werden.

Weiters ist aus der WO 2007/010850 eine Steuervorrichtung für eine Formmaschine bekannt. Durch diese Steuervorrichtung wird der Betriebsmodus, in dem die Maschine betrieben wird, auf der Basis eines bestimmten Zustandes der Maschine eingestellt und betrieben. Gemäß den Ausführungen in dieser Druckschrift kann die Produktivität der geformten Produkte dadurch verbessert werden.

JP-5-104594 A offenbart eine Einrichtung gemäß dem Oberbegrff des Anspruchs 1.

Aus der DE 1 604 598 A2 ist eine Vorrichtung zum Entformen von leichten Formlingen, insbesondere Kunststoffflaschen bekannt, bei der auch zur Entnahme aus dem Formwerkzeug Unterdruck Verwendung findet. Mit dieser Vorrichtung soll ein Entformen ohne manuelle Handhabung gewährleistet werden.

Ferner ist beispielsweise aus der DE 296 06 853 U1 eine Greifereinrichtung zur Entnahme von dünnwandigen Spritzgussteilen aus einem Spritzgusswerkzeug bekannt, wobei die Greifereinrichtung mit mehreren Sauggreifern versehen ist. Diese Greifereinrichtung soll eine unerwünschte Durchbiegung, insbesondere von CD-Hüllen, vermeiden.

Schließlich ist auch aus der DE 10 2005 061 193 A1 ein Handhabungsverfahren bekannt, wobei eine Bestückung der Maschine mit Produktionsteilen aus einem Produktionsteilspeicher mittels einer Handhabungsvorrichtung, der ein Bestückungsroboter zugeordnet ist, erfolgt.

Der gravierende Nachteil der Verfahren die mit Unterdruck arbeiten, ist darin zu sehen, dass eine Messung des Unterdruckes erst im allerletzten Teil, also kurz vor der Werkstückentnahme, erfolgen kann. Aus diesem Grund muss die Geschwindigkeit des Greifers bei der Werkstückentnahme entsprechend langsam gewählt werden, da die Gefahr besteht, dass der Greifer die Formhälfte beschädigt.

Es ist, wie oben aufgezeigt, bekannt, dass Spritzgussartikel aus einer Spritzgussmaschine mittels Saugdüsen oder Greifer bzw, Greifzange entnommen werden. Gerade bei älteren Spritzgussmaschinen tritt das Problem auf, dass der Öffnungshub nicht toleranzfrei ausgeführt wird, was es erschwert, das Werkstück mit dem Greifer zu erfassen. Ein nicht exaktes Erfassen des Werkstückes kann zu Produktionsmängel oder Produktionsunterbrechungen führen. Ebenso führt ein nicht exaktes Erfassen beim Handling von Spritzgussartikeln über Saugdüsen, beispielsweise beim Abbau eines Pufferstappels, zu Störungen im Produktionsablauf.

Aufgabe der Erfindung ist es daher, ein Verfahren der eingangs genannten Art zu schaffen, das einerseits die obigen Nachteile vermeidet und anderseits die Gesamtwirtschaftlichkeit der Anlage erhöht.

Durch die Erfindung wird die Aufgabe gelöst.

Die erfindungsgemäße Einrichtung ist dadurch gekennzeichnet, dass im Greifer des Handhabungsautomaten eine Abstands-Messeinrichtung, zur kontinuierlichen bzw. permanenten Erfassung des Abstandes (a₁ + a₂) vom Greifer zu einem Referenzpunkt oder einer Referenzfläche, zur bewegbaren, Werkzeughälfte mit dem Werkstück, wobei bei Erreichen eines einstellbaren oder ermittelten Schwellwertes des Abstandes a₁, beispielsweise beim Abstand a₂ die Vorwärtsbewegung des Handhabungsautomaten, vorzugsweise in einem Bremsvorgang, stoppt, angeordnet ist und dass der Messwert der Abstands-Messeinrichtung der Steuer- und Regeleinheit zugeführt ist, wobei die Abstands-Messeinrichtung eine Lichtlaufzeit-Messeinrichtung, insbesondere ein Time-of-Flight (TOF) -Sensor, ist, oder die Abstands-Messeinrichtung eine Laser-Messeinrichtung, die entsprechend dem Triangulator-Prinzip misst, ist. Mit der Erfindung ist es erstmals möglich, den Greifer zur Entnahmebewegung, also bei der Annäherung an das Werkstück viel schneller zu bewegen, da die Messung des Abstandes von der Formhälfte, also einem Referenzpunkt oder einer Referenzfläche, zur Saugdüse bereits nach dem Einfahren des Greifers in den Öffnungsbereich der Form erfolgen kann. Der Startpunkt der Messung kann somit durch den Annäherungsweg immens verlängert werden, das gegebenenfalls eine höhere Anfangsgeschwindigkeit oder eine längere Bewegung des Greifers mit hoher Geschwindigkeit erlaubt. Dadurch wird auch die Gesamtgeschwindigkeit zur Entnahme gravierend erhöht, das natürlich zur rationellen Wirtschaftlichkeit der Anlage, gegenüber den Lösungen gemäß dem Stand der Technik, beiträgt. Ferner wird auch die Form und das Werkstück exakt "gefunden" und schonungsvoll übernommen. Die Bewegung des Handhabungsautomaten, auch Entformachse genannt, wird durch den Messwert der Abstands-Messeinrichtung, der der Steuer- und Regeleinheit zugeführt wird, gesteuert.

Die Abstands-Messeinrichtung wird direkt im Greifer angeordnet, so dass permanent mit optimierter und maximaler Entnahmegeschwindigkeit zur ermittelten Entnahmeposition verfahren werden kann.

Vorteilhaft ist auch, dass derartige Sensoren am Markt derart günstig zu erwerben sind, dass für jedes Produkt und somit für jeden Greifer, der oder die im Greifer fixierten Sensoren mitgetauscht werden können. Die Steuer- und Regeleinheit kann am Handhabungsautomaten über eine Verbindung unverrückbar angebracht sein. Auch der Produktwechsel kann schneller durchgeführt werden, da ja der TOF-Sensor bereits am Greifer angeordnet ist.

Vorteilhaft ist auch, dass die Abstands-Messeinrichtung eine Laser-Messeinrichtung, die entsprechend dem Triangulator-Prinzip misst, ist, da bei diesem Prinzip ein Lichtstrahl in leichtem Winkel auf die Referenzfläche fällt und wird in einem spitzen Winkel reflektiert und trifft dadurch an einer vom Ausgangspunkt leicht versetzten Stelle wieder am Sensor ein. Der Abstand wird dann über die Dreiecksgeometrie errechnet. Neben dem Wegfall der produktabhängigen Justierung des Sensors, kann dadurch die Messgenauigkeit erhöht werden. Dadurch dass der Laser mit dem Greifer auf die geöffnete Formplatte zufährt, wird der zu messende Weg verkleinert. Die Auflösung kann daher bei gleichbleibendem Wertebereich bezogen auf eine in Stufen reduzierte Maximaldistanz erhöht werden.

Gemäß einer besonderen Ausgestaltung der Erfindung ist die Verbindung von der Abstands-Messeinrichtung zur Steuer- und Regeleinheit eine draht- und kabellose Datenverbindung, wobei die Sensorplatine des TOF-Sensors mit einer Batterie versorgt ist. Damit entfällt eine Kabelverbindung von der Abstands-Messeinrichtung zur Steuer- und Regeleinheit, wodurch ein Wechsel des Greifers sehr vereinfacht wird. Darüber hinaus wird durch die kabellose Verbindung eine Stör- oder Fehlerquelle für den Betrieb vermieden.

Gemäß einer besonderen Ausgestaltung der Erfindung ist die Verbindung von der Abstands-Messeinrichtung zur Steuer- und Regeleinheit eine draht- und kabellose Datenverbindung, wobei die Sensorplatine des TOF-Sensors auf Basis Energy-Harvesting oder Kinetic-Energy-Harvesting versorgt ist. Sowohl die Verbindung auf Basis Energy-Harvesting oder Kinetic-Energy-Harvesting ist wireless. Die Vorteile einer derartigen Verbindung liegen auf der Hand.

Es ist auch Aufgabe der Erfindung ein Verfahren zum Umschlag bzw. zur Hantierung und Transport von Werkstücken, insbesondere zur Entnahme von Spritzgießartikeln aus einer Spritzgussmaschine, unter Verwendung einer Einrichtung gemäß den obigen Ausführungen zu schaffen.

Das erfindungsgemäße Verfahren ist dadurch gekennzeichnet, dass eine Einrichtung gemäß der Erfindung angewendet wird, wobei bei der Annäherung des Greifers an das Werkstück die Abstands-Messeinrichtung, welche durch einen TOF-Sensor oder eine Laser-Messeinrichtung gebildet wird, aktiviert wird oder ist und der Abstand und/oder der Weg bis zum Erfassen bzw. Ansaugen des Werkstückes kontinuierlich bzw. permanent gemessen wird und der Messwert der programmierbaren Steuer- und Regeleinheit zugeführt wird und bei Erreichen eines einstellbaren oder ermittelten Abstandes und/oder Weges die Vorwärtsbewegung des Handhabungsautomaten, in einem Bremsvorgang mit verzögerter Geschwindigkeit, gestoppt wird und das Werkstück vom 3reifer entnommen wird bzw. von der Saugdüse angesaugt wird. Das erfindungsgemäße Verfahren basiert darauf, dass bei einer Annäherung des Greifers an das Werkstück der Abstand oder der Weg gemessen wird. Der Abstand wird kontinuierlich oder permanent gemessen. Bei Erreichen eines einstellbaren Wertes des Abstandes wird die Bewegung des Handhabungsautomaten über die Steuer- und Regeleinheit verlangsamt und zwar bis zum Stoppen bei der Berührung vom Werkstück. Durch den vorprogrammierten Verzögerungsweg bzw. Bremsweg des Handhabungsautomaten berührt bei seinem Bewegungsstillstand die Saugdüse oder der Greifer bzw. die Greifzange das Werkstück und kann für den Transport gefasst werden. Der Entformhub oder die Aufnahme des Werkstückes ist somit an keine fixe Position des Spritzguss-Werkzeuges gebunden. Durch diese flexible, jedoch genaue, Annäherung des Greifers bzw. der Saugdüse zum Werkstück ist die Wahrscheinlichkeit einer Beschädigung des Werkstückes durch zu hohen Druck oder durch ein schlechtes Erfassen minimiert. In der Realität kann auch die Saugdüse bis ca. 5 mm Spiel aufnehmen.

Natürlich liegt es auch im Rahmen der Erfindung das erfindungsgemäße Verfahren auch zum "Finden" der Teile beim Abstapeln aus einem Werkstück-Puffer bzw. zum "Finden" der Ablageposition auf einem Stapel o. dgl. einzusetzen.

Gemäß der Erfindung erfolgt die Vorwärtsbewegung bzw. der Bremsvorgang bis zum Stopp mit verzögerter Geschwindigkeit. Wie bereits erwähnt, ist es natürlich von Vorteil, wenn vor der Berührung Saugdüse mit Werkstück die Geschwindigkeit des Handhabungsautomaten verlangsamt wird.

Nach einer besonderen Ausgestaltung der Erfindung werden zur Programmierung der Steuer- und Regeleinheit des Handhabungsautomaten die Basis-Parameter, wie beispielsweise Umschlagstrecke bzw. Entnahmestrecke, Öffnungsweg der Spritzgussmaschine über ein Lernverfahren (teach-in) und beispielsweise Größe, Form, Gewicht, Lage und Oberflächenstruktur des Werkstückes empirisch ermittelt und eingegeben. Durch die Einbeziehung dieser Faktoren, auch zu sehen als Kalibrierung, ist das Verfahren individuell und für praktisch alle Spritzgussmaschinentypen anwendbar.

Die Erfindung wird an Hand eines Ausführungsbeispieles, das in der Zeichnung dargestellt ist, näher erläutert.

Es zeigt:
Fig. 1 schematisch einen Werkzeugraum einer Spritzgussmaschine mit dem Handhabungsautomaten und
Fig. 2 ein Diagramm des Entnahmevorganges des Handhabungsautomaten.

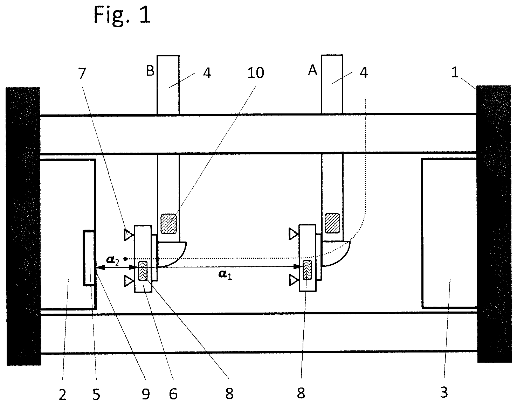

Gemäß der Fig. 1 ist eine Spritzgussmaschine 1 mit den offenen Formwerkzeughälften 2, 3 gezeigt. Ein Handhabungsautomat 4 wird in die offenen Werkzeughälften 2, 3 zur Entnahme eines Werkstückes 5 eingefahren. Die Stellung A des Handhabungsautomaten 4 ist der Eintritt in die offene Form, wobei in Stellung A der Handhabungsautomat 4 bereits den Punkt für die Freigabe der Messung auf die Referenzfläche 9 erreicht hat.

In der Stellung B befindet sich der Handhabungsautomat 4 im Bereich des Werkstückes 5.

Der Handhabungsautomat 4 ist mit einem, über eine programmierbare Steuer- und Regeleinheit beaufschlagbaren, Antrieb bewegbar. Der Handhabungsautomat 4 ist mit einem Greifer 6 versehen und weist mindestens eine Saugdüse 7 auf. Im Handhabungsautomat 4 ist eine programmierbare Steuer- und Regeleinheit 10, gegebenenfalls mit einer eigenständigen Sensor-Auswerteeinheit, vorgesehen.

Im Greifer 6 des Handhabungsautomaten 4 ist eine Abstands-Messeinrichtung 8, beispielsweise der TOF-Sensor, zur Erfassung des Abstandes a₁ + a₂ vom Greifer 6 zu einem Referenzpunkt oder einer Referenzfläche 9, beispielsweise zur, vorzugsweise bewegbaren, Werkzeughälfte 2 mit dem Werkstück 5, angeordnet. Der Messwert a₁ + a₂, also der Abstand von der Referenzfläche 9 zur Abstands-Messeinrichtung 8 des einfahrenden Handhabungsautomat 4 in der Stellung A, wird der Steuer- und Regeleinheit 10 zugeführt.

Die Abstands-Messeinrichtung 8 kann eine Lichtlaufzeit-Messeinrichtung, insbesondere ein Time-of-Flight (TOF) -Sensor, sein.

Eine alternative Lösung wäre, die Abstands-Messeinrichtung 8 als Laser-Messeinrichtung vorzusehen, die entsprechend dem Triangulator-Prinzip misst.

Die Verbindung von der Abstands-Messeinrichtung 8 zur Steuer- und Regeleinheit 10 oder der Sensor-Auswerteeinheit ist vorzugsweise eine draht- und kabellose Datenverbindung, wobei die Sensorplatine des TOF-Sensors mit einer Batterie versorgt ist. Als alternative, elegante Lösung könnte die Verbindung von der Abstands-Messeinrichtung 8 zur Steuer- und Regeleinheit 10 eine draht- und kabellose Datenverbindung sein, wobei die Sensorplatine des TOF-Sensors auf Basis Energy-Harvesting oder Kinetic-Energy-Harvesting versorgt wird.

Bei einer Annäherung des Greifers 6 an das Werkstück 5 werden die Saugdüsen 7 aktiviert. Je näher die Saugdüsen 7 sich dem Werkstück nähern, umso kleiner wird der Abstand a_{1.} Dieser Abstand a₁ + a₂ wird kontinuierlich bzw. permanent gemessen und bei Erreichen eines einstellbaren oder ermittelten Schwellwertes des Abstandes a_{1,} beispielsweise beim Abstand a₂ wird die Vorwärtsbewegung des Handhabungsautomaten 4, vorzugsweise in einem Bremsvorgang, gestoppt. Berühren die Saugdüsen 7 das Werkstück 5, wird das Werkstück 5 von den Saugdüsen 7 angesaugt. Der Abstand a_{1 +} a₂ kann in einem Interwall von 4 Millisekunden gemessen werden. Dabei könnte die Messung des Abstandes a₁ + a₂ analog erfolgen, wobei dieser Messwert zur Verarbeitung bereits im Sensor oder in der Steuer- und Regeleinheit 10 digitalisiert wird.

Die Vorwärtsbewegung bzw. der Bremsvorgang nach Erreichen des Schwellwertes erfolgt bis zum Stopp mit verzögerter Geschwindigkeit. Zur Programmierung der Steuer- und Regeleinheit des Handhabungsautomaten 4 werden die Basis-Parameter, wie beispielsweise Umschlagstrecke bzw. Entnahmestrecke, Öffnungsweg der Spritzgussmaschine über ein Lernverfahren (teach-in) und Größe, Form, Gewicht, Lage und Oberflächenstruktur des Werkstückes 5 für den Schwellwert empirisch ermittelt und eingegeben.

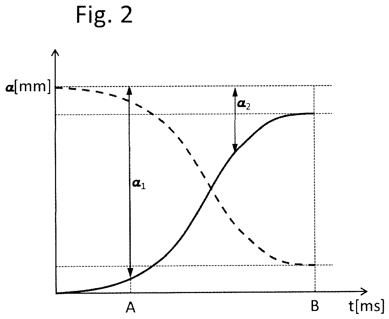

Gemäß der Fig. 2 ist in einem Diagramm einerseits -mit durchgehenden Strich - der Weg s des Handhabungsautomaten 4 über der Zeit t und anderseits der Abstand a strichliert - über der Zeit t gezeigt.

Aus dem Diagramm ist ersichtlich, dass in der Eintrittsphase A des Handhabungsautomaten 4 in die Formöffnung die Abstands-Messeinrichtung 8 zu messen beginnt. Außerdem wird der Weg sehr rasch zurückgelegt. In diesem Bereich sind die Saugdüsen 7 noch nicht aktiviert, nähern sich jedoch dem Werkstück 5. Natürlich könnten die Saugdüsen auch früher aktiviert werden.

In der Stellung A werden die Saugdüsen 7 aktiviert, die Messungen beginnen und der Abstand a₁ nähert sich dem eingestellten Sollwert a₂. Vorzugsweise ab dem Schwellwert oder allenfalls ab der Stellung A nähert sich der Greifer 6 mit verminderter Geschwindigkeit dem Werkstück 5.

Etwa in der Stellung B nähern sich die Saugdüsen 7 bzw. der Greifer 6 dem Werkstück 5 weiter an und der Abstand a₂ wird erreicht. Wird dieser Wert als Schwellwert angenommen bzw. definiert, so setzt hier der Bremsvorgang des Handhabungsautomaten 4 ein. Der Unterdruck der Saugdüsen 7 kann natürlich zum Entnahmevorgang größer werden. Durch die verzögerte Geschwindigkeit bis zum Stoppen ist eine schonungsvolle Entnahme gewährleistet.

## Patentansprüche

1. Einrichtung zum Umschlag bzw. zur Hantierung und Transport von Werkstücken, insbesondere zur Entnahme von Spritzgießartikeln aus einer Spritzgussmaschine, wobei ein, mit einer programmierbaren Steuer- und Regeleinheit versehener, Handhabungsautomat mit einem, mindestens eine Saugdüse zum Erfassen bzw. Ansaugen des Werkstückes aufweisenden, Greifer vorgesehen ist, **dadurch gekennzeichnet, dass** im Greifer (6) des Handhabungsautomaten (4) eine Abstands-Messeinrichtung (8) zur kontinuierlichen bzw. permanenten Erfassung des Abstandes (a₁ + a₂) vom Greifer (6) zu einem Referenzpunkt oder einer Referenzfläche (9), zur bewegbaren, Werkzeughälfte (2) mit dem Werkstück (5), wobei bei Erreichen eines einstellbaren oder ermittelten Schwellwertes des Abstandes (a₁), beispielsweise beim Abstand (a₂), die Vorwärtsbewegung des Handhabungsautomaten (4), vorzugsweise in einem Bremsvorgang, stoppt, angeordnet ist und dass der Messwert der Abstands-Messeinrichtung (8) der Steuer- und Regeleinheit (10) zugeführt ist, wobei die Abstands-Messeinrichtung (8) eine Lichtlaufzeit-Messeinrichtung, insbesondere ein Time-of-Flight (TOF) - Sensor, ist oder die Abstands-Messeinrichtung (8) eine Laser-Messeinrichtung, die entsprechend dem Triangulator-Prinzip misst, ist.

2. Einrichtung nach Anspruch 1 oder 2, **dadurch gekennzeichnet, dass** die Verbindung von der Abstands-Messeinrichtung (8) zur Steuer- und Regeleinheit (10) eine draht- und kabellose Datenverbindung ist, wobei die Sensorplatine des TOF-Sensors mit einer Batterie versorgt ist.

3. Einrichtung nach Anspruch 1 oder 2, **dadurch gekennzeichnet, dass** die Verbindung von der Abstands-Messeinrichtung (8) zur Steuer- und Regeleinheit (10) eine draht- und kabellose Datenverbindung ist, wobei die Sensorplatine des TOF-Sensors auf Basis Energy-Harvesting oder Kinetic-Energy-Harvesting versorgt ist.

4. Verfahren zum Umschlag bzw. zur Hantierung und Transport von Werkstücken, insbesondere zur Entnahme von Spritzgießartikeln aus einer Spritzgussmaschine, unter Verwendung einer Einrichtung gemäß einem oder mehreren der Ansprüche 1 bis 3, **dadurch gekennzeichnet, dass** bei der Annäherung des Greifers (6) an das Werkstück (5) die Abstands-Messeinrichtung (8), welche durch einen TOF-Sensor oder eine Laser-Messeinrichtung gebildet wird, aktiviert wird oder ist und der Abstand (a₁+a₂) und/oder der Weg bis zum Erfassen bzw. Ansaugen des Werkstückes (5) kontinuierlich bzw. permanent gemessen wird und der Messwert der programmierbaren Steuer- und Regeleinheit (10) zugeführt wird und bei Erreichen eines einstellbaren oder ermittelten Abstandes (a₂) und/oder Weges die Vorwärtsbewegung des Handhabungsautomaten (4), in einem Bremsvorgang mit verzögerter Geschwindigkeit, gestoppt wird und das Werkstück (5) vom Greifer (6) entnommen wird bzw. von der Saugdüse (7) angesaugt wird.

5. Verfahren nach Anspruch 4 **dadurch gekennzeichnet, dass** zur Programmierung der Steuer- und Regeleinheit (10) des Handhabungsautomaten (4) die Basis-Parameter, wie beispielsweise Umschlagstrecke bzw. Entnahmestrecke, Öffnungsweg der Spritzgussmaschine über ein Lernverfahren und beispielsweise Größe, Form, Gewicht, Lage und Oberflächenstruktur des Werkstückes (5) empirisch ermittelt und eingegeben werden.

## Claims

1. Device for handling and/or transporting, respectively, workpieces, in particular for the removal of injection-molded items from an injection-molding machine, wherein a handling robot having a programmable control and regulating unit is provided that comprises a gripper having at least one suction nozzle for grasping of the workpiece or fixating it by suction, respectively, **characterized in that** in the gripper (6) of the handling robot (4) a distance-measuring device (8) for continuous or permanent, respectively, detection of the distance (a_{1 +} a₂) from the gripper (6) to a reference point or a reference surface (9), to the movable mold half (2) with the workpiece (5) is provided, wherein upon reaching an adjustable or determined limit value of the distance (a₁), for example at the distance (a₂), the forward movement of the handling robot (4) is stopped, preferably in a braking operation, and that the measured value of the distance-measuring device (8) is fed into the control and regulation unit (10), wherein the distance-measuring device (8) is a light transit time measuring device, in particular a time-of-flight (TOF) sensor, or a laser measuring device, which measures according to the triangulation principle.

2. Device according to claim 1 or 2, **characterized in that** the connection from the distance-measuring device (8) to the control and regulation unit (10) is a wireless data connection, wherein the sensor board of the TOF sensor is supplied with a battery.

3. Device according to claim 1 or 2, **characterized in that** the connection from the distance-measuring device (8) to the control and regulation unit (10) is a wireless data connection, wherein the sensor board of the TOF sensor is supplied based on energy harvesting or kinetic energy harvesting.

4. Method for handling and/or transporting, respectively, workpieces, in particular for the removal of injection-molded items from an injection-molding machine, using a device according to any one or several of claims 1 to 3, **characterized in that** when the gripper (6) approaches the workpiece (5), the distance-measuring device (8), which is formed by a TOF sensor or a laser measurement device, is or has been activated, and the distance (a_{1 +} a₂) and/or the path until the workpiece (5) is grasped or fixated by suction, respectively, is measured continuously or permanently, respectively, and the measured value is fed into the programmable control and regulating unit (10), and upon reaching an adjustable or determined distance (a₂) and/or path, the forward movement of the handling robot (4) is stopped in a braking operation with delayed speed, and the workpiece (5) is withdrawn by the gripper (6) or fixated by the suction of the suction nozzle (7), respectively.

5. Method according to claim 4, **characterized in that** for programming the control and regulating unit (10) of the handling robot (4) the basic parameters, such as e.g. transfer distance or removal distance, respectively, or opening path of the injection-molding machine, are determined and entered via a teaching method and e.g. size, shape, position and surface structure of the workpiece are determined empirically and entered (5).

## Revendications

1. Dispositif de transbordement ou de manutention et de transport de pièces, en particulier pour le prélèvement d'articles moulés par injection à partir d'une machine de moulage par injection, le dispositif comportant un manipulateur automatique muni d'une unité de commande et de régulation programmable et comportant un préhenseur avec au moins une buse d'aspiration permettant de saisir ou d'aspirer la pièce, **caractérisé en ce qu'**un dispositif de mesure de la distance (8) est disposé dans le préhenseur (6) du manipulateur automatique (4) en vue de la mesure continue ou permanente de la distance (a_{1 +} a₂) entre le préhenseur (6) et un point de référence ou une surface de référence (9) par rapport au demi-moule (2) mobile contenant la pièce (5), le mouvement d'avance du manipulateur automatique (4) étant arrêté, de préférence par un processus de freinage, lorsqu'une valeur seuil programmable ou déterminée pour la distance (a₁), par exemple avec la distance (a₂), est atteinte et que la valeur mesurée par le dispositif de mesure de la distance (8) est envoyée à l'unité de commande et de régulation (10), le dispositif de mesure de la distance (8) étant un dispositif de mesure de propagation de la lumière, en particulier un capteur de mesure du temps de vol (TOF), ou le dispositif de mesure de la distance (8) étant un dispositif de mesure laser, qui procède à la mesure selon le principe de triangulation.

2. Dispositif selon la revendication 1 ou 2, **caractérisé en ce que** la connexion entre le dispositif de mesure de la distance (8) et l'unité de commande et de régulation (10) est une connexion de données sans fil et sans câble, la platine du capteur TOF étant alimentée par une pile.

3. Dispositif selon la revendication 1 ou 2, **caractérisé en ce que** la connexion entre le dispositif de mesure de la distance (8) et l'unité de commande et de régulation (10) est une connexion de données sans fil et sans câble, la platine du capteur TOF étant alimentée sur la base de la récolte d'énergie ou de la récolte d'énergie cinétique.

4. Procédé de transbordement ou de manutention et de transport de pièces, en particulier pour le prélèvement d'articles moulés par injection à partir d'une machine de moulage par injection, à l'aide d'un dispositif selon une ou plusieurs des revendications 1 à 3, **caractérisé en ce que** le dispositif de mesure de la distance (8), constitué d'un capteur TOF ou d'un dispositif de mesure laser, est activé ou déjà activé lorsque le préhenseur (6) s'approche de la pièce (5) et que la distance (a₁ + a₂) et/ou le trajet jusqu'à la mesure ou l'aspiration de la pièce (5) est mesuré en continu ou en permanence et que la valeur mesurée est envoyée à l'unité de commande et de régulation (10) programmable et que, lorsqu'une distance et/ou trajet programmable ou déterminée (a₂) est atteinte, le mouvement d'avance du manipulateur automatique (4) est arrêté par un processus de freinage à vitesse réduite et la pièce (5) retirée du préhenseur (6) ou aspirée par la buse d'aspiration (7).

5. Procédé selon la revendication 4, **caractérisé en ce que**, en vue de la programmation de l'unité de commande et de régulation (10) du manipulateur automatique (4), les paramètres de base, comme par exemple le trajet de transbordement ou trajet de prélèvement et la course d'ouverture de la machine de moulage par injection sont déterminés de manière empirique ou saisis par le biais d'un procédé d'apprentissage et par exemple de la taille, de la forme, du poids, de la position ou de la structure de la surface de la pièce (5).
